# FASCICULE DE BREVET EUROPEEN

(11) **EP 4 471 295 B1**
(45) Date de publication et mention de la délivrance du brevet: **01.04.2026**
(21) Numéro de dépôt: 24177359.7
(22) Date de dépôt: 22.05.2024
(51) Int. Cl.: F16H 57/08, F02C 7/36, F16H 1/28, F01D 25/18, F01D 25/16, F16H 55/17, F16H 57/04

(54) **SOLAIRE POUR UN RÉDUCTEUR MÉCANIQUE DE TURBOMACHINE D' AÉRONEF**
SOLAR FÜR EIN MECHANISCHES REDUKTIONSGETRIEBE EINES TURBOTRIEBWERKS EINES LUFTFAHRZEUGS
SOLAR FOR A MECHANICAL GEAR OF AN AIRCRAFT TURBINE ENGINE

(30) Priorité: 01.06.2023 FR 2305494
(43) Date de publication de la demande: 04.12.2024
(73) Titulaire: Safran Transmission Systems, 92700 Colombes (FR)
(72) Inventeur: GEDIN, Patrice Jocelyn Francis, 77550 Moissy-Cramayel (FR); BECK, Guillaume Julien, 77550 Moissy-Cramayel (FR); FRANCOIS, Loïc, 77550 Moissy-Cramayel (FR); MORELLI, Boris Pierre Marcel, 77550 Moissy-Cramayel (FR); PELTIER, Jordane Emile André, 77550 Moissy-Cramayel (FR); PENNACINO, Antoine Jacques Marie, 77550 Moissy-Cramayel (FR); SIMON, Adrien Louis, 77550 Moissy-Cramayel (FR)
(74) Mandataire: Gevers & Orès

(56) Documents cités:
- DE-A1- 102021 201 862
- DE-T5- 112019 000 782
- US-A1- 2002 014 133
- US-A1- 2019 162 292
- US-B2- 10 724 445

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 008 462, DE-A1-10 2021 201862, DE-T5-11 2019 000782, US-A1-2022/014133 et FR-A1-3 041 054.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Il existe plusieurs types d'engrènement par contact comme avec des dentures droites, hélicoïdales ou en chevron.

Une des problématiques d'un réducteur de ce type concerne la reprise des efforts extérieurs et des défauts de fabrication qu'il faut compenser par de la souplesse sur les interfaces.

Dans la présente demande, on entend par « souplesse », une aptitude d'une pièce ou d'une partie de pièce à se déformer élastiquement pour pouvoir absorber des efforts, en particulier lors de la transmission d'un couple de rotation.

On entend par « interface », une liaison entre deux pièces, cette liaison pouvant être par exemple un engrènement (via une ou des dentures par exemple) ou un accouplement (via des cannelures).

Dans la technique actuelle, il est connu de prévoir une souplesse au niveau de l'arbre d'entrée du réducteur ou à l'interface entre l'arbre d'entrée et le solaire.

L'arbre d'entrée comprend une extrémité tubulaire qui est engagée dans le solaire et qui comprend des cannelures d'accouplement avec des cannelures complémentaires du solaire. Cet arbre peut comprendre une souplesse qui se présente en général sous la forme d'un soufflet conférant à l'arbre une aptitude de déformation élastique en flexion ou en torsion.

En variante, une pièce intermédiaire de liaison entre l'arbre d'entrée et le solaire peut comprendre une souplesse.

Ces technologies ne sont toutefois pas entièrement satisfaisantes car elles se traduisent en général par un déséquilibre dans la transmission des efforts au solaire et donc par un chargement inhomogène de la denture du solaire. Une répartition homogène des charges sur les dents du solaire est au contraire souhaitée pour limiter les contraintes auxquelles est soumis le solaire en fonctionnement.

L'invention propose une solution à ce problème, qui est simple, efficace et économique.

### Résumé de l'invention

L'invention concerne un solaire pour un réducteur mécanique (6) de turbomachine d'aéronef, ce solaire ayant une forme annulaire autour d'un axe et comportant :
- une partie annulaire interne comportant à sa périphérie interne des cannelures d'accouplement,
- une partie annulaire externe comportant à sa périphérie externe au moins une denture d'engrènement, cette partie externe s'étendant autour de la partie interne, et
- un voile annulaire de liaison des parties interne et externe, ce voile étant situé entre les parties interne et externe et ayan une forme conférant au solaire une capacité de déformation, notamment en flexion,
caractérisé en ce que :
- au moins l'une des parties interne et externe comprend deux anneaux indépendants comportant chacun des cannelures ou une denture, et
- le voile comporte deux branches annulaires reliées respectivement à ces deux anneaux.

L'invention propose ainsi de prévoir une souplesse directement dans le solaire. Cette souplesse est conférée par le voile de liaison des parties interne et externe du solaire. Avantageusement, le voile confère une souplesse en directions radiale et axiale au solaire, c'est-à-dire que les anneaux sont aptes à se déplacer radialement l'un par rapport à l'autre et donc à se désaxer. Ce déplacement est rendu possible par une déformation élastique du voile qui absorbe ainsi des efforts lors de la transmission d'un couple de rotation.

La solution proposée ci-dessous est compatible :
- d'un réducteur simple ou à plusieurs étages,
- d'un réducteur planétaire, épicycloïdal ou différentiel,
- de dentures droites, hélicoïdales ou en chevron,
- de tout type de porte-satellites qu'il soit monobloc ou de type cage et porte-cage,
- de tout type de palier satellite, qu'il soit composé d'élément roulant, d'un palier hydrodynamique, etc.

Le solaire selon l'invention peut comprendre une ou plusieurs des caractéristiques suivantes, prises isolément les unes des autres, ou en combinaison les unes avec les autres :
- la partie interne comprend deux anneaux internes comportant des cannelures à leur périphérie interne, le voile comportant deux branches reliées respectivement aux anneaux internes ;
- la partie externe comprend deux anneaux externes comportant chacun un denture à leur périphérie externe, le voile comportant deux branches reliées respectivement aux anneaux externes ;
- les deux branches s'étendent depuis la partie interne jusqu'à la partie externe ;
- les deux branches sont parallèles entre elles et perpendiculaires à l'axe ;
- les deux branches qui sont reliées aux anneaux internes sont reliées par une cloison unique à la partie externe, ou les deux branches qui sont reliées aux anneaux externes sont reliées par une cloison unique à la partie interne ;
- la cloison unique est perpendiculaire à l'axe et reliée au milieu de la partie externe ou interne ;
- les deux branches sont tronconiques, et forment en section axiale une forme en V ;
- le voile a en section axiale une forme générale en Y ;
- les deux branches internes sont reliées aux deux branches externes sensiblement au milieu du voile, c'est-à-dire à mi-distance des parties interne et externe ;
   -- les deux branches internes sont reliées aux deux branches externes par un fil annulaire du voile ou par une paroi cylindrique du voile ;
- les deux branches du voile sont reliées entre-elles par une paroi cylindrique du voile ;
- le voile a en section axiale une forme générale en X ou H ;
- le voile est réalisé en une seule pièce ;
   -- le solaire est réalisé en une seule pièce ;
   -- le voile est formé d'une seule pièces avec au moins une partie de chacune des parties interne et externe ;
   -- les anneaux de la partie interne sont à distance axiale l'un de l'autre, et/ou les anneaux de la partie externe sont à distance axiale l'un de l'autre ;
   -- la distance axiale entre les anneaux de la partie interne est supérieure ou égale à la dimension axiale de chacun des anneaux de la partie interne ;
   -- la distance axiale entre les anneaux de la partie externe est inférieure ou égale à la dimension axiale de chacun des anneaux de la partie externe ;
   -- la distance axiale entre les anneaux de la partie interne est différente de la distance axiale entre les anneaux de la partie externe ; en particulier, la distance axiale entre les anneaux de la partie interne est supérieure de la distance axiale entre les anneaux de la partie externe ;
   -- les anneaux de la partie interne sont indépendants de façon à pouvoir se déplacer indépendamment l'un de l'autre, et/ou les anneaux de la partie externe sont indépendants de façon à pouvoir se déplacer indépendamment l'un de l'autre.

La présente invention concerne également un réducteur mécanique pour une turbomachine d'aéronef, ce réducteur comportant :
- un porte-satellites qui comprend un premier axe de rotation,
- un solaire tel que décrit ci-dessus qui est monté dans le porte-satellites et qui est centré sur le premier axe,
- une couronne qui s'étend autour du solaire et du premier axe, et
- des satellites qui sont portés par le porte-satellites et qui sont engrenés avec le solaire et la couronne, les satellites comportant des seconds axes de rotation parallèles au premier axe.

L'invention concerne en outre une turbomachine, en particulier d'aéronef, comportant un réducteur mécanique ou un solaire tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique,
[Fig.3] la figure 3 est une vue très schématique partielle en coupe axiale d'un solaire pour un réducteur mécanique d'aéronef,
[Fig.4] la figure 4 est une vue schématique en perspective d'un solaire pour un réducteur mécanique d'aéronef,
[Fig.5] la figure 5 est une vue schématique en coupe axiale d'un réducteur mécanique d'aéronef comportant le solaire de la figure 4 ;
[Fig.6] la figure 6 est une vue schématique partielle en coupe axiale d'un solaire selon un mode de réalisation de l'invention,
[Fig.7] la figure 7 est une vue schématique partielle en coupe axiale d'un solaire selon une variante de réalisation de l'invention,
[Fig.8] la figure 8 est une vue schématique partielle en coupe axiale d'un solaire selon une autre variante de réalisation de l'invention,
[Fig.9] la figure 9 est une vue schématique partielle en coupe axiale d'un solaire selon une autre variante de réalisation de l'invention,
[Fig.10] la figure 10 est une vue schématique partielle en coupe axiale d'un solaire selon une autre variante de réalisation de l'invention,
[Fig.11] la figure 11 est une vue schématique partielle en coupe axiale d'un solaire selon une autre variante de réalisation de l'invention, et
[Fig.12] la figure 12 est une vue schématique partielle en coupe axiale d'un solaire selon une autre variante de réalisation de l'invention.

### Description détaillée de l'invention

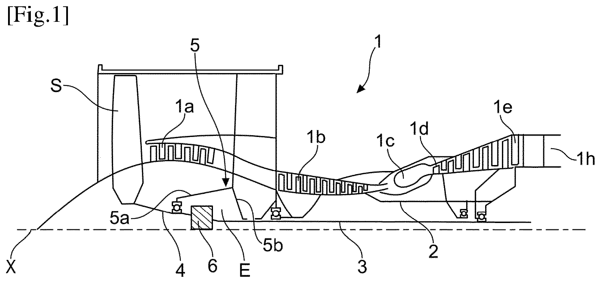

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

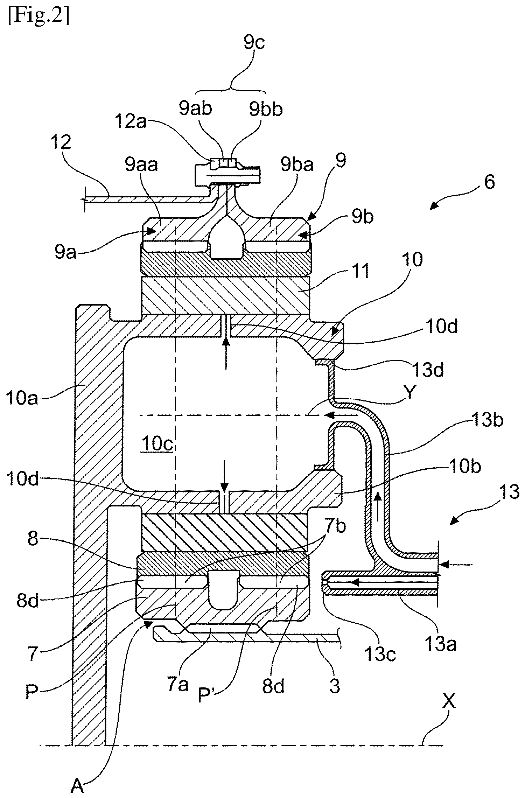

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

En variante, les satellites 8 pourraient ne pas être équirépartis autour de l'axe X.

L'ensemble des satellites 8 est maintenu par un châssis appelé porte-satellites 10. Chaque satellite 8 tourne autour de son propre axe Y, et engrène avec la couronne 9.

En sortie nous avons :
▪ Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une autre configuration planétaire, l'ensemble des satellites 8 est maintenu par un porte-satellites 10 qui est fixé au carter moteur ou stator 5. Chaque satellite 8 entraine la couronne qui est rapportée à l'arbre de soufflante 4 via un porte-couronne 12.
▪ Dans une autre configuration différentielle, l'ensemble des satellites 8 est maintenu par un porte-satellites 10 qui est relié à un premier arbre de soufflante 5. Chaque satellite 8 entraine la couronne qui est rapportée à un second arbre de soufflante contrarotatif 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes :
▪ Une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
▪ Une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur 6 à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b.

Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

Dans la technique antérieure représentée à la figure 2, un solaire 7 de réducteur comprend un corps annulaire s'étendant autour de l'axe X et comprenant à sa périphérie interne les cannelures 7a d'accouplement avec l'arbre 3, et à sa périphérie externe une denture 7b d'engrènement avec la denture 8d de chaque satellite 8. Les cannelures 7a sont situées dans un alésage central A traversant du corps qui est centré sur l'axe X.

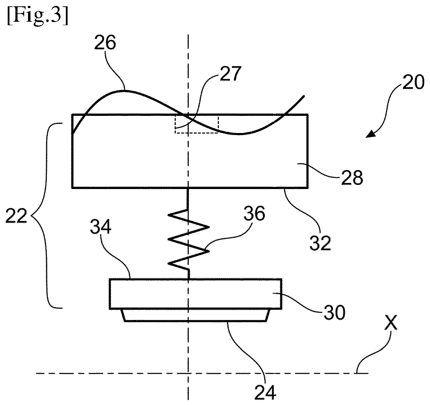

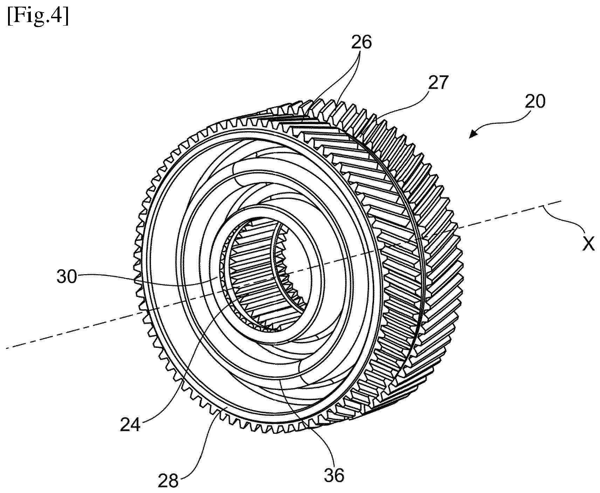

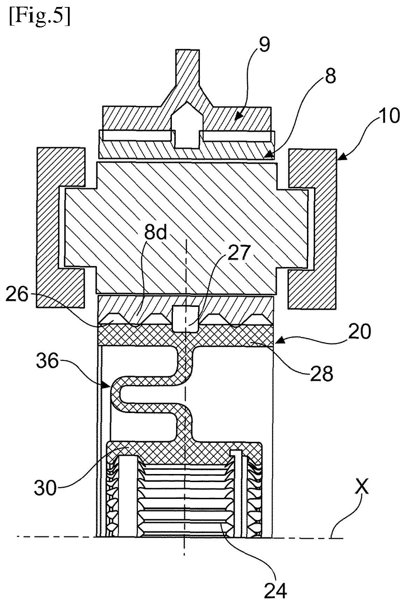

Les figure 3 à 5 illustrent de manière schématique un solaire comportant une capacité de déformation élastique en fonctionnement.

Le solaire 20 comprend un corps annulaire 22 s'étendant autour de l'axe X et comprenant à sa périphérie interne les cannelures 24 d'accouplement avec l'arbre 3, et à sa périphérie externe une denture 26 d'engrènement avec la denture 8d de chaque satellite 8.

Le corps 22 a la particularité de comprendre deux anneaux, respectivement externe 28 et interne 30, qui sont coaxiaux et s'étendent l'un autour de l'autre.

L'anneau externe 28 comporte à sa périphérie externe la denture 26 précitée. Cette denture 26 peut comprendre deux séries de dents adjacentes séparées axialement l'un de l'autre par une rainure annulaire 27 débouchant radialement vers l'extérieur. Ces deux séries de dents ont le même diamètre et peuvent être en chevron.

L'anneau externe 28 comporte à sa périphérie interne une surface interne 32, par exemple cylindrique.

L'anneau interne 30 comporte à sa périphérie interne les cannelures 24 précitées. Ces cannelures 24 sont par exemple droites ou rectilignes et parallèles à l'axe X.

L'anneau interne 30 comporte à sa périphérie externe une surface externe 34, par exemple cylindrique.

Le corps 22 comprend en outre un voile annulaire 36 de liaison qui est situé entre les anneaux 28, 30 et plus particulièrement entre les surfaces 32, 34.

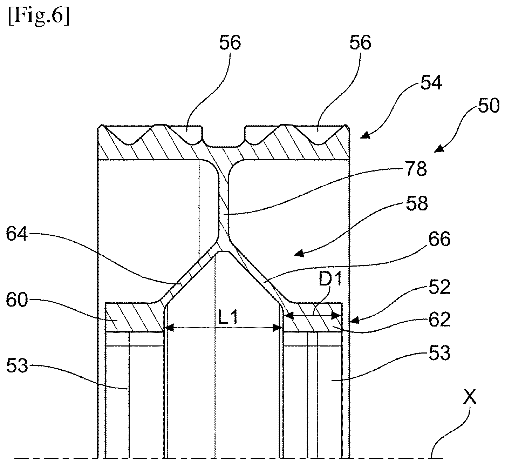

Les figures 6 à 12 illustrent plusieurs modes de réalisation de l'invention.

Le solaire 50 selon l'invention a une forme annulaire autour d'un axe X et comporte :
- une partie annulaire interne 52 comportant à sa périphérie interne des cannelures d'accouplement 53,
- une partie annulaire externe 54 comportant à sa périphérie externe au moins une denture d'engrènement 56, cette partie externe 54 s'étendant autour de la partie interne 52, et
- un voile annulaire 58 de liaison des parties interne et externe 52, 54, ce voile 58 étant situé entre les parties interne et externe 52, 54 et ayant une forme conférant au solaire 50 une capacité de déformation élastique.

Les cannelures 53 sont configurées pour être accouplées à des cannelures complémentaires d'un arbre d'entrée du réducteur, comme décrit dans ce qui précède.

Les dentures 56 sont configurées pour être engrenées avec des dentures complémentaires de satellites du réducteur, comme décrit dans ce qui précède.

Selon l'invention :
- au moins l'une des parties interne et externe 52, 54 comprend deux anneaux indépendants comportant chacun des cannelures 53 ou une denture 56, et
- le voile 58 comporte deux branches annulaires reliées respectivement à ces deux anneaux.

Dans le mode de réalisation de la figure 6, c'est la partie interne 52 de l'anneau 50 qui comprend deux anneaux internes 60, 62. Ces anneaux 60, 62 comportent des cannelures 53 à leur périphérie interne. Le voile 58 comporte deux branches internes 64, 66 reliées respectivement aux anneaux internes 60, 62.

A leur périphérie externe, les deux branches 64, 66 sont reliées par une cloison unique 68 à la partie externe 54. Cette cloison unique 68 est perpendiculaire à l'axe X et reliée au milieu de la partie externe 54.

Dans l'exemple représenté, les deux branches 64, 66 sont tronconiques, et forment en section axiale une forme en V dont l'ouverture est orientée radialement vers l'intérieur, c'est-à-dire vers l'axe X. Le voile 58 a en section axiale une forme générale en Y, qui est ici renversé.

La distance axiale L1 entre les anneaux 60, 62 est supérieure à la dimension axiale D1 de chacun de ces anneaux.

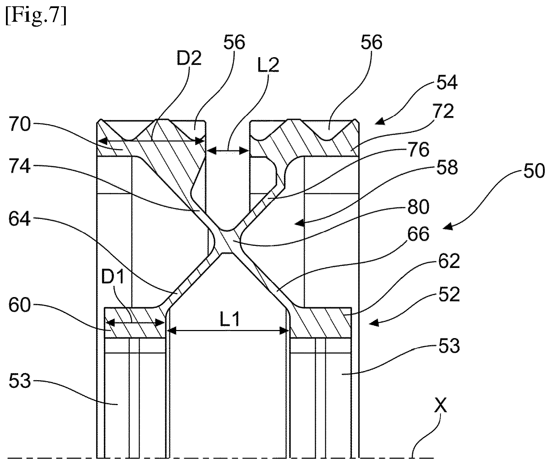

Dans le mode de réalisation de la figure 7, chacune des parties interne et externe 52, 54 de l'anneau 50 comprend deux anneaux respectivement internes 60, 62 et externes 70, 72. Les anneaux 60, 62 de la partie interne 52 comportent des cannelures 53 à leur périphérie interne. Les anneaux 70, 72 de la partie externe 54 comportent chacun une denture 56 à leur périphérie externe. Le voile 58 comporte deux branches internes 64, 66 reliées respectivement aux anneaux internes 60, 62, et deux branches externes 74, 76 reliées respectivement aux anneaux externes 70, 72.

Les deux branches internes 64, 66 sont reliées aux deux branches externes 74, 76 sensiblement au milieu du voile 58, c'est-à-dire à mi-distance des parties interne et externe 52, 54.

Dans l'exemple représenté, les deux branches internes 64, 66 sont reliées aux deux branches externes 74, 76 par un fil annulaire 78 du voile 58, c'est-à-dire par une partie annulaire du voile ayant de faibles dimensions en direction axiale et radiale.

Toujours dans l'exemple représenté, chacune des branches 64, 66, 74, 76 a une forme générale tronconique. Le voile 58 a en section axiale une forme générale en X, ou les branches 64, 66, 74, 76 forment en section axiale une forme en X.

La distance axiale L1 entre les anneaux 60, 62 est supérieure à la dimension axiale D1 de chacun de ces anneaux. La distance axiale L2 entre les anneaux 70, 72 est inférieure à la dimension axiale D2 de chacun de ces anneaux. Dans l'exemple représenté, L1 est supérieure à L2

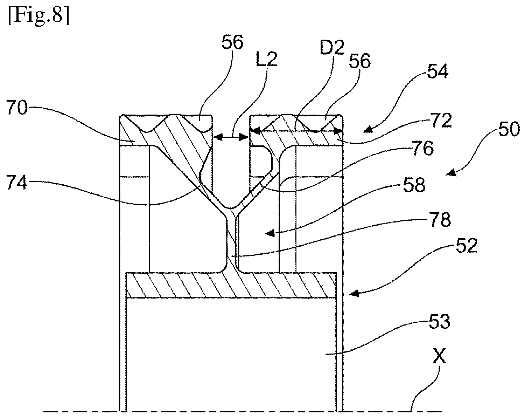

Dans le mode de réalisation de la figure 8, c'est la partie externe 54 de l'anneau 50 qui comprend deux anneaux externes 70, 72. Ces anneaux 70, 72 comportent chacun une denture 56 à leur périphérie interne. Le voile 58 comporte deux branches externes 74, 76 reliées respectivement aux anneaux externes 70, 72.

A leur périphérie interne, les deux branches 74, 76 sont reliées par une cloison unique 78 à la partie interne 52. Cette cloison unique 78 est perpendiculaire à l'axe X et reliée au milieu de la partie interne 52.

Dans l'exemple représenté, les deux branches 74, 76 sont tronconiques, et forment en section axiale une forme en V. Le voile 58 a en section axiale une forme générale en Y.

La distance axiale L2 entre les anneaux 70, 72 est inférieure à la dimension axiale D2 de chacun de ces anneaux.

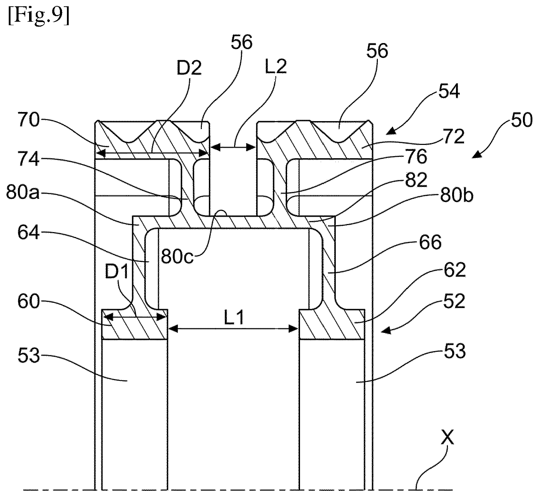

Dans le mode de réalisation de la figure 9, chacune des parties interne et externe 52, 54 de l'anneau 50 comprend deux anneaux respectivement internes 60, 62 et externes 70, 72. Les anneaux 60, 62 de la partie interne 52 comportent des cannelures 53 à leur périphérie interne. Les anneaux 70, 72 de la partie externe 54 comportent chacun une denture 56 à leur périphérie externe. Le voile 58 comporte deux branches internes 64, 66 reliées respectivement aux anneaux internes 60, 62, et deux branches externes 74, 76 reliées respectivement aux anneaux externes 70, 72.

Les deux branches internes 64, 66 sont reliées aux deux branches externes 74, 76 sensiblement au milieu du voile 58, c'est-à-dire à mi-distance des parties interne et externe 52, 54.

Dans l'exemple représenté, les deux branches internes 64, 66 sont reliées aux deux branches externes 74, 76 par une paroi cylindrique 80 du voile 58 qui est centrée sur l'axe X.

Les bords annulaires libres 80a, 80b libres de cette paroi 80 sont reliées respectivement aux périphéries externes des branches internes 64, 66. Les branches 74, 76 s'étendent depuis la surface cylindrique externe 80c de la paroi 80 jusqu'aux anneaux externes 70, 72.

Toujours dans l'exemple représenté, chacune des branches 64, 66, 74, 76 a une orientation radiale et est donc perpendiculaire à l'axe X. Le voile 58 a en section axiale une forme générale en H.

La distance axiale L1 entre les anneaux 60, 62 est supérieure à la dimension axiale D1 de chacun de ces anneaux. La distance axiale L2 entre les anneaux 70, 72 est inférieure à la dimension axiale D2 de chacun de ces anneaux. Dans l'exemple représenté, L1 est supérieure à L2

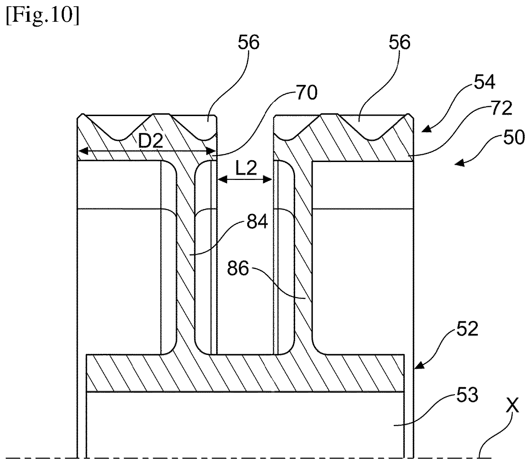

Dans le mode de réalisation de la figure 10, c'est la partie externe 54 de l'anneau 50 qui comprend deux anneaux externes 70, 72. Ces anneaux 70, 72 comportent des dentures 56 à leur périphérie externe. Le voile 58 comporte deux branches 84, 86 reliées respectivement aux anneaux externes 70, 72.

Le voile 58 est formé par ces deux branches 84, 86 qui s'étendent depuis la partie externe 54 jusqu'à la partie interne 52.

A leur périphérie interne, les deux branches 84, 86 sont reliées à une surface cylindrique externe de la partie interne 52.

La distance axiale L2 entre les anneaux 70, 72 est inférieure à la dimension axiale D2 de chacun de ces anneaux.

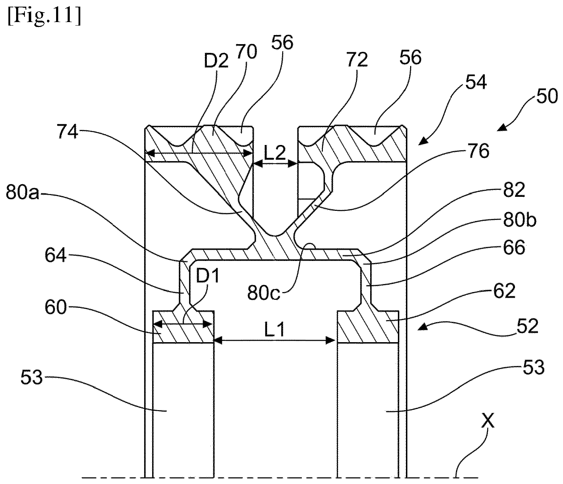

Dans le mode de réalisation de la figure 11, chacune des parties interne et externe 52, 54 de l'anneau 50 comprend deux anneaux respectivement internes 60, 62 et externes 70, 72. Les anneaux 60, 62 de la partie interne comportent des cannelures 53 à leur périphérie interne. Les anneaux 70, 72 de la partie externe comportent chacun une denture 56 à leur périphérie externe. Le voile 58 comporte deux branches internes 64, 66 reliées respectivement aux anneaux internes 60, 62, et deux branches externes 74, 76 reliées respectivement aux anneaux externes 70, 72.

Les deux branches internes 64, 66 sont reliées aux deux branches externes 74, 76 sensiblement au milieu du voile 58, c'est-à-dire à mi-distance des parties interne et externe 52, 54.

Dans l'exemple représenté, les deux branches internes 64, 66 sont reliées aux deux branches externes 74, 76 par une paroi cylindrique 80 du voile 58. Toujours dans l'exemple représenté, chacune des branches 74, 76 a une forme générale tronconique et chacune des branches 64, 66 est perpendiculaire à l'axe X.

Les bords annulaires libres 80a, 80b libres de la paroi 80 sont reliées respectivement aux périphéries externes des branches internes 64, 66. Les branches 74, 76 s'étendent depuis le milieu la surface cylindrique externe 80c de la paroi 80 jusqu'aux anneaux externes 70, 72.

Le voile 58 a en section axiale une forme générale en H.

La distance axiale L1 entre les anneaux 60, 62 est supérieure à la dimension axiale D1 de chacun de ces anneaux. La distance axiale L2 entre les anneaux 70, 72 est inférieure à la dimension axiale D2 de chacun de ces anneaux. Dans l'exemple représenté, L1 est supérieure à L2

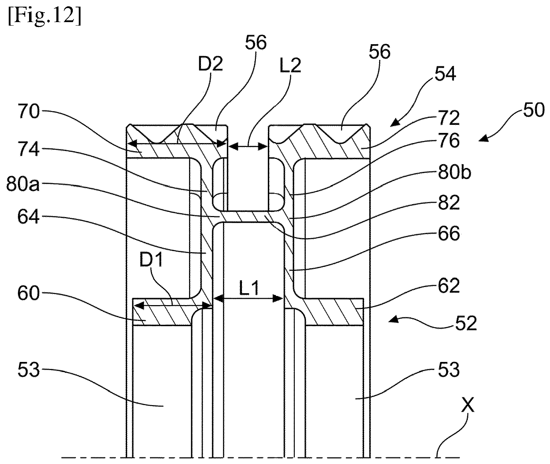

Dans le mode de réalisation de la figure 12, chacune des parties interne et externe 52, 54 de l'anneau 50 comprend deux anneaux respectivement internes 60, 62 et externes 70, 72. Les anneaux 60, 62 de la partie interne 52 comportent des cannelures 53 à leur périphérie interne. Les anneaux 70, 72 de la partie externe comportent chacun une denture 56 à leur périphérie externe. Le voile 58 comporte deux branches internes 64, 66 reliées respectivement aux anneaux internes 60, 62, et deux branches externes 74, 76 reliées respectivement aux anneaux externes 70, 72.

Les deux branches internes 64, 66 sont reliées aux deux branches externes 74, 76 sensiblement au milieu du voile 58, c'est-à-dire à mi-distance des parties interne et externe 52, 54.

Dans l'exemple représenté, les deux branches internes 64, 66 sont reliées aux deux branches externes 74, 76 par une paroi cylindrique 80 du voile 58. Les bords annulaires libres 80a, 80b de cette paroi 80 sont reliées respectivement aux périphéries externes des branches internes 64, 66. Les bords annulaires libres 80a, 80b sont également reliés respectivement aux périphéries internes des branches externes 74, 76.

Toujours dans l'exemple représenté, chacune des branches 64, 66, 74, 76 a une orientation radiale et est donc perpendiculaire à l'axe X. Le voile 58 a en section axiale une forme générale en H.

La distance axiale L1 entre les anneaux 60, 62 est supérieure ou égale à la dimension axiale D1 de chacun de ces anneaux. La distance axiale L2 entre les anneaux 70, 72 est inférieure à la dimension axiale D2 de chacun de ces anneaux. Dans l'exemple représenté, L1 est supérieure à L2

Quel que soit son mode de réalisation, le voile 58, voire de préférence le solaire 50, peut être formé d'une seule pièce, par exemple par fabrication additive, par usinage ou par fonderie.

Les épaisseurs du voile 58 et de ses branches sont choisies en fonction de la souplesse recherchée et du couple à transmettre.

Les dentures 56 peuvent être droites ou en chevron par exemple

Les cannelures 53 peuvent être bombées, centrées, et pourraient même être frettées ou être maintenues avec un écrou. Une souplesse suffisante permet de faciliter le dimensionnement de la denture tout en gardant des cannelures rapportées par exemple.

La présente invention apporte plusieurs avantages parmi lesquels :
- elle profite d'un encombrement disponible pour ne pas encombrer le reste du moteur,
- elle permet de profiter de cannelures rapportées tout en gardant une liberté axiale.

## Revendications

1. Solaire (50) pour un réducteur mécanique (6) de turbomachine (1) d'aéronef, ce solaire (50) ayant une forme annulaire autour d'un axe (X) et comportant :
- une partie annulaire interne (52) comportant à sa périphérie interne des cannelures d'accouplement (53),
- une partie annulaire externe (54) comportant à sa périphérie externe au moins une denture d'engrènement (56), cette partie externe (54) s'étendant autour de la partie interne (52), et
- un voile annulaire (58) de liaison des parties interne et externe (52, 54), ce voile (58) étant situé entre les parties interne et externe (52, 54) et ayant une forme conférant au solaire (50) une capacité de déformation élastique,
**caractérisé en ce que** :
- la partie interne (52) comprend deux anneaux (60, 62) indépendants comportant chacun des cannelures (53), et/ou la partie externe (54) comprend deux anneaux (70, 72) indépendants comportant chacun une denture (56), et
- le voile (58) comporte deux branches annulaires (64, 66, 74, 76, 84, 86) reliées respectivement à ces deux anneaux (60, 62, 70, 72).

2. Solaire (50) selon la revendication 1, dans lequel la partie interne (52) comprend deux anneaux internes (60, 62) comportant des cannelures (53) à leur périphérie interne, le voile (58) comportant deux branches (64, 66) reliées respectivement aux anneaux internes (60, 62).

3. Solaire (50) selon la revendication 1 ou 2, dans lequel la partie externe (54) comprend deux anneaux externes (70, 72) comportant chacun une denture (56) à leur périphérie externe, le voile (58) comportant deux branches (74, 76, 84, 86) reliées respectivement aux anneaux externes (70, 72).

4. Solaire (50) selon la revendication 2 ou 3, dans lequel les deux branches (84, 86) s'étendent depuis la partie interne (52) jusqu'à la partie externe (54).

5. Solaire (50) selon la revendication 4, dans lequel les deux branches (84, 86) sont parallèles entre elles et perpendiculaires à l'axe (X).

6. Solaire (50) selon la revendication 2 ou 3, dans lequel les deux branches (64, 66) qui sont reliées aux anneaux internes (60, 62) sont reliées par une cloison unique (78) à la partie externe (54), ou les deux branches (74, 76) qui sont reliées aux anneaux externes (70, 72) sont reliées par une cloison unique (78) à la partie interne (52).

7. Solaire (50) selon la revendication 6, dans lequel la cloison unique (78) est perpendiculaire à l'axe (X) et reliée au milieu de la partie externe (54) ou interne (52).

8. Solaire (50) selon la revendication 6 ou 7, dans lequel les deux branches (64, 66, 74, 76) sont tronconiques, et forment en section axiale une forme en V.

9. Solaire (50) selon l'une des revendications 6 à 8, dans lequel le voile (58) a en section axiale une forme générale en Y.

10. Solaire (50) selon l'ensemble des revendications 2 et 3, dans lequel les deux branches (64, 66) qui sont reliées respectivement aux anneaux internes (60, 62), sont reliées aux deux branches (74, 76) qui sont reliées respectivement aux anneaux externes (70, 72), sensiblement au milieu du voile (58), c'est-à-dire à mi-distance des parties interne et externe (52, 54), formant ainsi respectivement deux branches internes (64, 66) et deux branches externes (70, 72) du voile (58).

11. Solaire (50) selon la revendication 10, dans lequel les deux branches du voile (58) sont reliées entre-elles par une paroi cylindrique (82) du voile (58).

12. Solaire (50) selon la revendication 10 ou 11, dans lequel le voile (58) a en section axiale une forme générale en X ou H.

13. Solaire (50) selon l'une des revendications précédentes, dans lequel le voile (58) est réalisé en une seule pièce.

14. Réducteur mécanique (6) pour une turbomachine (1) d'aéronef, ce réducteur comportant :
- un porte-satellites (10) qui comprend un premier axe de rotation (X),
- un solaire (50) selon l'une des revendications précédentes qui est monté dans le porte-satellites (10) et qui est centré sur le premier axe (X),
- une couronne (9) qui s'étend autour du solaire (50) et du premier axe (X), et
- des satellites (8) qui sont portés par le porte-satellites (10) et qui sont engrenés avec le solaire (50) et la couronne (9), les satellites (8) comportant des seconds axes de rotation (Y) parallèles au premier axe (X).

15. Turbomachine (1) d'aéronef, comportant un réducteur mécanique (6) selon la revendication 14 ou un solaire (50) selon l'une des revendications 1 à 13.

## Patentansprüche

1. Sonnenrad (50) für ein mechanisches Untersetzungsgetriebe (6) einer Turbotriebwerk (1) eines Luftfahrzeugs, wobei dieses Solar (50) eine ringförmige Form um eine Achse (X) aufweist und umfasst:
- einen ringförmigen inneren Teil (52), der an seiner inneren Peripherie Kopplungsrillen (53) umfasst,
- einen ringförmigen äußeren Teil (54), der an seiner äußeren Peripherie mindestens eine Eingriffsverzahnung (56) umfasst, wobei sich dieser äußere Teil (54) um den inneren Teil (52) herum erstreckt, und
- einen ringförmigen Steg (58) zum Verbinden des inneren und äußeren Teils (52, 54), wobei sich dieser Steg (58) zwischen dem inneren und äußeren Teil (52, 54) befindet und eine Form aufweist, die dem Sonnenrad (50) eine elastische Verformungskapazität verleiht, **dadurch gekennzeichnet, dass**:
- der innere Teil (52) zwei unabhängige Ringe (60, 62) umfasst, die jeweils Rillen (53) umfassen, und/oder der äußere Teil (54) zwei unabhängige Ringe (70, 72) umfasst, die jeweils eine Verzahnung (56) umfassen, und
- der Steg (58) zwei ringförmige Verzweigungen (64, 66, 74, 76, 84, 86) umfasst, die mit diesen beiden Ringen (60, 62, 70, 72) verbunden sind.

2. Sonnenrad (50) nach Anspruch 1, wobei der innere Teil (52) zwei innere Ringe (60, 62) umfasst, die Rillen (53) an ihrer inneren Peripherie umfassen, wobei der Steg (58) zwei Verzweigungen (64, 66) umfasst, die jeweils mit den inneren Ringen (60, 62) verbunden sind.

3. Sonnenrad (50) nach Anspruch 1 oder 2, wobei der äußere Teil (54) zwei äußere Ringe (70, 72) umfasst, die jeweils eine Verzahnung (56) an ihrer äußeren Peripherie umfassen, wobei der Steg (58) zwei Verzweigungen (74, 76, 84, 86) umfasst, die jeweils mit den äußeren Ringen (70, 72) verbunden sind.

4. Sonnenrad (50) nach Anspruch 2 oder 3, wobei sich die beiden Verzweigungen (84, 86) vom inneren Teil (52) bis zum äußeren Teil (54) erstrecken.

5. Sonnenrad (50) nach Anspruch 4, wobei die beiden Verzweigungen (84, 86) parallel zueinander und senkrecht zur Achse (X) sind.

6. Sonnenrad (50) nach Anspruch 2 oder 3, wobei die beiden Verzweigungen (64, 66), die mit den inneren Ringen (60, 62) verbunden sind, durch eine einzige Wand (78) mit dem äußeren Teil (54) verbunden sind, oder die beiden Verzweigungen (74, 76), die mit den äußeren Ringen (70, 72) verbunden sind, durch eine einzige Wand (78) mit dem inneren Teil (52) verbunden sind.

7. Sonnenrad (50) nach Anspruch 6, wobei die einzige Wand (78) senkrecht zur Achse (X) ist und in der Mitte des äußeren (54) oder inneren (52) Teils verbunden ist.

8. Sonnenrad (50) nach Anspruch 6 oder 7, wobei die beiden Verzweigungen (64, 66, 74, 76) kegelstumpfförmig sind, und im axialen Querschnitt eine V-Form bilden.

9. Sonnenrad (50) nach einem der Ansprüche 6 bis 8, wobei der Steg (58) im axialen Querschnitt eine allgemeine Y-Form aufweist.

10. Sonnenrad (50) nach Ansprüche 2 und 3, wobei die beiden Verzweigungen (64, 66), die jeweils mit den inneren Ringen (60, 62) verbunden sind, mit den beiden Verzweigungen (74, 76) verbunden sind, die jeweils mit den äußeren Ringen (70, 72) im Wesentlichen in der Mitte des Stegs (58), das heißt auf halbem Abstand des inneren und äußeren Teils (52, 54) verbunden sind, die somit jeweils zwei innere Verzweigungen (64, 66) und zwei äußere Verzweigungen (70, 72) des Stegs (58) bilden.

11. Sonnenrad (50) nach Anspruch 10, wobei die beiden Verzweigungen des Stegs (58) durch eine zylindrische Wand (82) des Stegs (58) miteinander verbunden sind.

12. Sonnenrad (50) nach Anspruch 10 oder 11, wobei der Steg (58) im axialen Querschnitt eine allgemeine X- oder H-Form aufweist.

13. Sonnenrad (50) nach einem der vorstehenden Ansprüche, wobei der Steg (58) einstückig gefertigt ist.

14. Mechanisches Untersetzungsgetriebe (6) für ein Turbotriebwerk (1) eines Luftfahrzeugs, wobei dieses Untersetzungsgetriebe umfasst:
- einen Planetenträger (10), der eine erste Drehachse (X) umfasst,
- ein Sonnenrad (50) nach einem der vorstehenden Ansprüche, das im Planetenträger (10) angebracht ist und das auf der ersten Achse (X) zentriert ist,
- eine Krone (9), die sich um das Sonnenrad (50) und um die erste Achse (X) erstreckt, und
- Planeten (8), die von dem Planetenträger (10) getragen werden und die mit dem Sonnenrad (50) und der Krone (9) in Eingriff stehen, wobei die Planeten (8) zweite Drehachsen (Y) parallel zur ersten Achse (X) umfassen.

15. Turbotriebwerk (1) eines Luftfahrzeugs, das ein mechanisches Untersetzungsgetriebe (6) nach Anspruch 14 oder ein Sonnenrad (50) einem der Ansprüche 1 bis 13 umfasst.

## Claims

1. A sun gear (50) for a mechanical reduction gear (6) of an aircraft turbomachine (1), this sun gear (50) having an annular shape about an axis (X) and comprising:
- an inner annular part (52) comprising coupling splines (53) at its inner periphery,
- an outer annular part (54) comprising at its outer periphery at least one meshing toothing (56), this outer part (54) extending around the inner part (52), and
- an annular web (58) connecting the inner and outer parts (52, 54), this web (58) being located between the inner and outer parts (52, 54) and having a shape giving the sun gear (50) a capacity for elastic deformation,
**characterised in that**:
- the inner part (52) comprises two independent rings (60, 62) each comprising splines (53), and/or the outer part (54) comprises two independent rings (70, 72) each comprising a toothing (56), and
- the web (58) comprises two annular legs (64, 66, 74, 76, 84, 86) connected respectively to these two rings (60, 62, 70, 72).

2. The sun gear (50) according to claim 1, wherein the inner part (52) comprises two inner rings (60, 62) comprising splines (53) at their inner periphery, the web (58) comprising two legs (64, 66) connected respectively to the inner rings (60, 62).

3. The sun gear (50) according to claim 1 or 2, wherein the outer part (54) comprises two outer rings (70, 72) each comprising a toothing (56) at their outer periphery, the web (58) comprising two legs (74, 76, 84, 86) connected respectively to the outer rings (70, 72).

4. The sun gear (50) according to claim 2 or 3, wherein the two legs (84, 86) extend from the inner part (52) to the outer part (54).

5. The sun gear (50) according to claim 4, wherein the two legs (84, 86) are parallel to each other and perpendicular to the axis (X).

6. The sun gear (50) according to claim 2 or 3, wherein the two legs (64, 66) which are connected to the inner rings (60, 62) are connected by a single bulkhead (78) to the outer part (54), or the two legs (74, 76) which are connected to the outer rings (70, 72) are connected by a single bulkhead (78) to the inner part (52).

7. The sun gear (50) according to claim 6, wherein the single bulkhead (78) is perpendicular to the axis (X) and connected to the middle of the outer (54) or inner (52) part.

8. The sun gear (50) according to claim 6 or 7, wherein the two legs (64, 66, 74, 76) are frustoconical and form a V-shape in axial section.

9. The sun gear (50) according to one of claims 6 to 8, wherein the web (58) is generally Y-shaped in axial section.

10. The sun gear (50) according to all of claims 2 and 3, wherein the two legs (64, 66) which are connected respectively to the inner rings (60, 62), are connected to the two legs (74, 76) which are connected respectively to the outer rings (70, 72), substantially in the middle of the web (58), i.e. halfway between the inner and outer parts (52, 54), thus forming two inner legs (64, 66) and two outer legs (74, 76) of the web (58) respectively.

11. The sun gear (50) according to claim 10, wherein the two legs of the web (58) are connected by a cylindrical wall (82) of the web (58).

12. The sun gear (50) according to claim 10 or 11, wherein the web (58) is generally X- or H-shaped in axial section.

13. The sun gear (50) according to one of the preceding claims, wherein the web (58) is made in a single piece.

14. A mechanical reduction gear (6) for an aircraft turbomachine (1), the reduction gear comprising:
- a planet carrier (10) comprises a first axis of rotation (X),
- a sun gear (50) according to one of the preceding claims which is mounted in the planet carrier (10) and which is centered on the first axis (X),
- a ring gear (9) extending around the sun gear (50) and the first axis (X), and
- planet gears (8) carried by the planet carrier (10) and meshing with the sun gear (50) and the ring gear (9), the planet gears (8) comprising second axes of rotation (Y) parallel to the first axis (X).

15. An aircraft turbomachine (1), comprising a mechanical reduction gear (6) according to claim 14 or a sun gear (50) according to one of claims 1 to 13.
